Europäisches Patentamt

European Patent Office

Office européen des brevets

(11) Publication number: 0 425 083 A2

# EUROPEAN PATENT APPLICATION

(21) Application number: 90309788.9

(22) Date of filing: 06.09.90

(51) Int. Cl.⁵: B29C 53/08, B60R 13/06,
//B29L31:26,B29L31:30

(30) Priority: 23.10.89 GB 8923789

(43) Date of publication of application:
02.05.91 Bulletin 91/18

(84) Designated Contracting States:
DE ES FR IT

(71) Applicant: DRAFTEX INDUSTRIES LIMITED
3 Glenfinlas Street
Edinburgh, EH3 6YY, Scotland(GB)

(72) Inventor: Niemanns, Gerd
Bahnstrasse 29
W-4155 Grefrath 1(DE)

(74) Representative: Foster, David Martyn et al
MATHISEN MACARA & CO. The Coach
House 6-8 Swakeleys Road
Ickenham Uxbridge UB10 8BZ(GB)

(54) Sealing strips and methods of making them.

(57) A sealing strip for fitting to a substantially vertically mounted flange, such as running around the luggage boot opening of a motor vehicle body, has a channel-shaped gripping section (12) for embracingly gripping the flange, and a softer sealing section (6). The latter is fixed obliquely to the gripping section (5). At corners or bends in the mounting flange, the sealing section (6) tends to "bridge across" the corner into the dotted position (6A). An effective seal at these corners may therefore be lost. In order to prevent this, the sealing strip is positioned on a jig corresponding to the flange or at least each of the corners therein. By means of a vertically movable flat plate, the bridged-over sealing section (6A) at such corner is pressed back into the correct orientation and held there temporarily while a foaming agent is injected into its hollow interior. Once solidified, the foaming agent holds the sealing section in the correct attitude even when the plate is removed but has sufficient flexibility so as not to impair the sealing function of the sealing section.

Fig.1.

## SEALING STRIPS AND METHODS OF MAKING THEM

The invention relates to sealing strips and methods of making them.

According to the invention, there is provided a sealing strip, comprising a channel-shaped gripping section for embracingly gripping a mounting flange, and a softer sealing section mounted on the outside of the gripping section and running therealong, the sealing section being positioned obliquely with respect to the plane of symmetry of the gripping section, and holding means for holding the sealing section in the correct orientation with respect to the gripping section at bends or corners in the strip.

According to the invention, there is further provided a method of manufacturing a sealing strip for fitment to a mounting flange or the like which is positioned around the periphery of an opening closable by a closure member and which extends substantially perpendicularly to the local plane of the opening, the sealing strip comprising a channel-shaped gripping section for embracingly gripping the flange and a hollow sealing section attached to the outside of the gripping section and positioned obliquely with respect to the plane of symmetry of the gripping section, the method comprising the steps of bending part of the sealing strip into a configuration corresponding to a corner or bend in the flange, applying a force to the outside of the sealing section so as to offset any tendency of its to bridge across the corner or bend, temporarily holding the sealing section in the correct attitude, and injecting material into the hollow interior of the sealing section at the corner or bend which, after subsequent solidification, holds the sealing section in the correct attitude when the force has been removed but without impairing its sealing function.

Sealing strips embodying the invention and methods for making them according to the invention will now be described, by way of example only, with reference to the accompanying diagrammatic drawings in which:

Figure 1 is a cross-section through one of the sealing strips;

Figures 2 is a diagrammatic plan view of a luggage boot opening in a vehicle body to which the sealing strip shown in Figure 1 is to be fitted; and

Figure 3 illustrates steps in one of the methods.

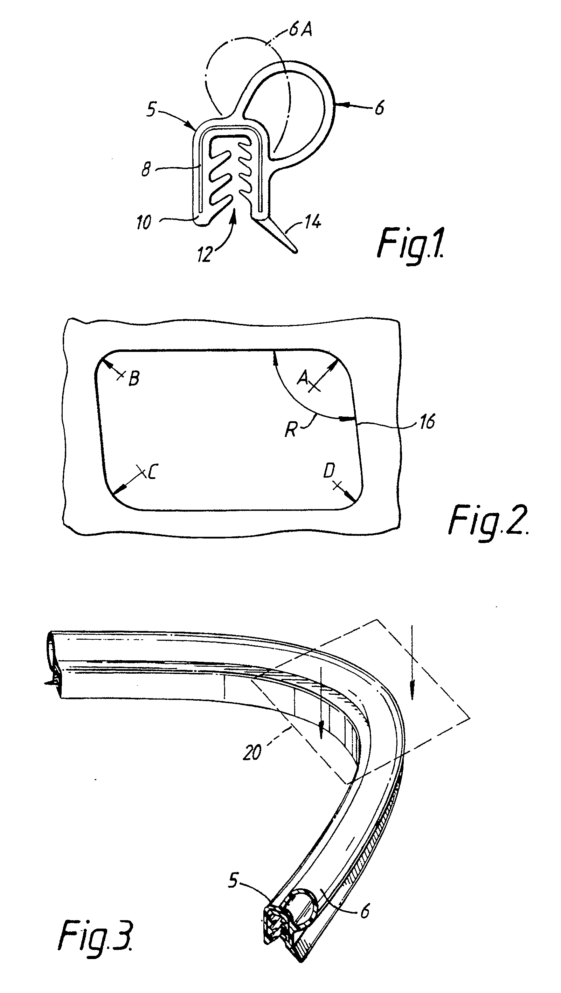

As shown in Figure 1, the sealing strip comprises a longitudinally extending channel-shaped gripping section 5 to which is attached a similarly extending sealing section 6.

The gripping section 5 comprises a channel-shaped metal core or carrier 8 which is embedded in extruded plastics or rubber material 10. The carrier 8 can take any convenient form. It may, for example, comprise a series of U-shaped metal elements arranged side-by-side along the length of the carrier to define the channel and connected to each other by short connecting links or perhaps completely unconnected. One or more lengths of flexible tape or wire may extend along the length of the carrier and connected to it or merely embedded in the extruded material. The metal carrier may instead comprise wire looped to and fro.

The extruded material 10 carries gripping lips 12 on the facing inside walls of the channel and directed obliquely towards the base of the channel. There may be more or fewer lips than those shown in Figure 1. The extruded material of the lips may be softer than the channel-shaped material 10.

An additional lip 14 may be provided at the mouth of the channel.

Other arrangements of lips may be used instead.

The sealing section 6 is hollow and made of rubber, preferably, particularly sponge or foamed rubber. The sealing section 6 may be manufactured separately and adhesively secured to the gripping section 5. Instead, however, it may be coextruded with the material 10 in the case where the latter is rubber.

As shown, the sealing section 6 is mounted obliquely with respect to the vertical (as shown in the Figure) plane of symmetry of the seal - that is, it is offset to one side so as to be connected to the outside of the base of the channel and to one side wall.

The seal is designed for fitting around the luggage boot opening of a motor vehicle body. A plan view of such an opening is shown in Figure 2. This opening is defined by a vertically upstanding flange 16. In use, the gripping section 5 (Figure 1) embraces the flange and is held firmly in position by the resilience of the metal carrier 8 and the lips 12. The sealing section 6 is thus supported around the opening, the manner in which the seal is fitted onto the opening being such that the sealing section 6 is offset to the outside of the opening. When the lid for the luggage boot opening is closed onto the opening, a peripheral part of the lid engages and partially compresses the sealing section 6 so as to provide a weather-tight seal.

In order to provide an effective weather-tight seal, it is necessary that the sealing section 6 maintains its correct attitude with respect to the gripping section 5 around the whole of the periphery of the flange 16. However, at the corners of the flange 16, as shown at A,B,C and D in Figure 2, there is a tendency for the sealing section 6 to "bridge across" the corner. Such "bridging across" is illustrated diagrammatically at 6A by the dotted line. In other words, the sealing section 6 tends to move towards the vertical axis of symmetry of the sealing section and to become more upright. Any such bridging over would be disadvantageous in that it implies that the sealing section 6 moves out of its intended position and thus may no longer provide an effective seal.

In order to avoid this, during manufacture the sealing strip is placed on a jig corresponding to the flange 16, or one of its corners. Figure 3 illustrates part of the sealing strip in position on such a jig, this jig emulating region R at the corner A in Figure 2. When the sealing strip has been positioned on the jig, a suitable pressing member, which can be in the form of a plate and is shown dotted at 20 in Figure 3, is pressed downwardly onto the sealing section 6 by means not shown but which may be manually or automatically controlled. The plate 20 presses on the sealing section 6 in the region of the corner and forces it back, from its "bridged over" attitude (as shown at 6A in Figure 1) to the correct position. The plate 20 holds the sealing section in this position temporarily. During this time, the sealing section 6, in the region of the corner, is injected with a foaming agent which solidifies within the hollow of the sealing section and holds it in the correct attitude when the plate 20 is thereafter lifted clear.

The seal is now ready for delivery to the car manufacturer for assembly onto the luggage boot opening and the solidified injected material ensures that the sealing section 6 will hold itself in the correct attitude relative to and around the whole length of the flange 16.

The solidified foaming agent maintains sufficient flexibility so as not to impair the sealing function of the sealing section 6.

## Claims

1. A sealing strip, comprising a channel-shaped gripping section (5) for embracingly gripping a mounting flange (16), and a softer sealing section (6) mounted on the outside of the gripping section (5) and running therealong, characterised in that the sealing section (6) is positioned along the junction between the base of the channel of the gripping section (5) and one of its side walls, and by a holding device for holding the sealing section (6) in the correct orientation with respect to the gripping section (5) at bends or corners in the strip.

2. A strip according to claim 1, characterised in that the sealing section (6) is hollow and in that the holding device comprises flexible material substantially filling the hollow of the sealing section (6) at the corners or bends.

3. A method of manufacturing a sealing strip for fitment to a mounting flange (16) or the like which is positioned around the periphery of an opening closable by a closure member, the flange (16) extending substantially perpendicularly to the local plane of the opening, the sealing strip comprising a channel-shaped gripping section (5) for embracingly gripping the flange (16) and a hollow sealing section (6) attached to the outside of the gripping section (5) to run along the junction between the base of the channel of the gripping section (5) and one of its side walls, the method comprising the step of bending part of the sealing strip (5,6) into a configuration corresponding to a corner or bend in the flange (16), characterised by the steps of applying a force to the outside of the sealing section (6) so as to offset any tendency of its to bridge across the corner or bend,temporarily holding the sealing section (6) in the correct attitude, and injecting material into the hollow interior of the sealing section at the corner or bend which, after subsequent solidification, holds the sealing section in the correct attitude when the force has been removed but without impairing its sealing function.

4. A method according to claim 3, characterised in that the injected material is a flexible solidifying foaming agent.

5. A method according to claim 3 or 4, characterised in that the force is applied by means of a substantially flat plate.

Fig.1.

Fig.2.

Fig.3.

4